# EUROPEAN PATENT SPECIFICATION

(11) **EP 4 108 961 B1**
(45) Date of publication and mention of the grant of the patent: **03.04.2024**
(21) Application number: 22179437.3
(22) Date of filing: 16.06.2022
(51) Int. Cl.: F16K 3/24, F16K 47/04, F16K 47/08, F16K 27/04, F16K 3/08

(54) **CONTROL ELEMENT FOR A REGULATING VALVE**
STEUERELEMENT FÜR EIN REGELVENTIL
ÉLÉMENT DE COMMANDE POUR UNE SOUPAPE DE RÉGULATION

(30) Priority: 25.06.2021 IT 202100016721
(43) Date of publication of application: 28.12.2022
(73) Proprietor: CCI Italy S.r.l., 20122 Milano (IT)
(72) Inventor: MASTROVITO, Marco, 20122 Milano (IT)
(74) Representative: Bruni, Giovanni

(56) References cited:
- DE-A1- 2 330 392
- GB-A- 2 207 528
- US-A- 2 568 084
- US-A- 5 113 908

## Description

### Technical field

The present invention relates to a pressure control element or *trim,* that is a control element of a regulating valve, which normally comprises a stationary element, also called "resistor" which is the pressure control element, a movable element also called "shutter" and a sealing seat, which is stationary. Hereinafter, the term trim will be used to refer to the valve control element and to the assembly of resistor, shutter and sealing seat. The present invention applies to valves operating with multiphase flow (also called valves for service in the presence of contaminants) which are also required to withstand large pressure drops.

The concept addresses the need to handle drilling burrs, large particles, debris or any contaminant that makes the fluid prone to clogging the valve, while providing true multi-stage flow control and continuous control over a wide range of operations. Because the design is made to be tolerant to the presence of particles in the fluid, this solution can be used efficiently for a wide range of applications with contaminated fluids, even compressible ones. Reliable use of this technology is also possible in the presence of cavitation and erosion phenomena.

### Background art

As is well known, there are numerous applications in both the 'Power' and 'Oil & Gas' markets where cage valves with trimmers are used, which must meet low noise and kinetic energy requirements. Current technologies are based on stationary resistors with inputs arranged radially on the outer surface and outputs arranged radially on the inner surface. The resistor circumscribes the valve shutter, and therefore depending on the lift of the shutter, i.e., its partial or full stroke, the outflow from the trim will vary.

In multi-path and multi-stage pressure control organs, the flow passes through several tortuous paths, the size and shape of each path being fixed. To increase the flow through the control organ, usually the resistor, the number of paths is acted upon. In other words, according to known technique, the geometry of each flow path, i.e. the size of each of its cross-sections, is fixed and more paths are used to increase the flow rate. In common practice, it is possible to have two paths that differ from each other in geometry, number of stages and size, but they cannot adapt their characteristics to the stroke of the shutter.

An example is the document US2568084A that describes multiple orifice pressure reducing devices in which the size of orifices and hence the total pressure drop may be varied. An example of a pressure control element according to the preamble of claim 1 is disclosed in the document GB2207528A that describes a fluid flow control for high pressure fluid flow with reduced noise including a valve with a control element located between a valve chamber and a valve outlet. The control element includes at least two cooperating co-axially directed tubular members having transverse ribs extending circumferentially about the walls of the tubular members. Another example is the document US5113908A that describes a trim design comprises a housing having cylindrical passage passing therethrough. Another example is the document DE2330392A describes a device for achieving low-noise operation of valves for flowing media, in particular pressure reducing valves, whose valve passage opening with one arranged behind it in the direction of flow.

In known applications for control valves for use with contaminated fluids, the trim is designed with wide paths to be able to allow some debris and particles to pass through. The minimum path size, for example in wellhead valves, can be 6 mm, but for some applications (control valves in the presence of drilling mud) it is necessary to have at least ½" as a minimum path size. Therefore, the flow rate required by this application is not very high and it is not possible to use many fluid paths with this minimum size. For this reason, such control valves normally adopt a simple pressure control technology that cannot guarantee optimal flow control in the most demanding situations. On the other hand, conventional multi-path technologies are not suitable: in fact, at partial lift the defined output cross-section between resistor and shutter can often be much smaller than the cross-sectional area of the paths within the resistor. In this condition, the speed will be much higher at the shutter than at the rest of the trim and, therefore, the pressure control will be equivalent to a control using single-stage technology, or only slightly better. As a result, erosion and/or cavitation phenomena may occur, with damage to the control edge of the shutter and consequent loss of functionality.

Furthermore, it is worth mentioning that multistage pressure control organs in some applications, e.g., throttle valves, show inherent control problems: in fact, the control characteristics have a very variable slope, which introduces problems into the feedback control loop due to the change in control gain.

There is a need, therefore, to define a control organ or trim for a control valve that is free of the aforementioned drawbacks.

### Summary of the invention

According to the present invention, the number of fluid paths is fixed while their size (cross-sectional area) is continuously changed as the shutter lift changes. Having a smaller number of paths, at the limit even a single path, means that the path size is as large as possible, thus allowing burrs and debris to pass through the flow path without clogging it.

In particular, according to the invention, the height (or angular amplitude in the rotary embodiment) of the tortuous path varies continuously so as to be effective throughout the entire excursion of the shutter. The fluid flow will always follow a radial and circumferential pattern within the trim and will never have a velocity component with the same axis of the shutter. In this configuration, velocity peaks are eliminated with great benefit to the life of the control components and, in particular, the sealing surfaces.

In other words, the invention involves continuously controlling a single dimension of a three-dimensional path without changing the other dimensions, thus maintaining not only the topology but also the velocity distribution. This ensures good particle transport properties without creating erosion (areas with above-average velocities) or precipitation and accumulation of particles in the trim (areas with below-average velocities).

The invention can be applied to either an alternative valve (also known as a globe valve), a rotary valve or an axial valve.

The present invention thus aims to overcome the limitations of conventional multistage trims, in terms of controllability, when the trim is required to handle highly contaminated fluids in combination with low flow rates. In other words, it allows for good "*rangeability*" (i.e., the ratio between maximum and minimum efflux capacities) and excellent control accuracy, while maintaining the efficiency of the trim's tortuous paths throughout the entire shutter stroke.

According to the invention, there is also a plurality of coupling surfaces. In fact, each fixed surface that couples with a movable surface forms a pair of coupling surfaces. In conventional trims, the only coupling surfaces are the outer surface of the shutter and the inner surface of the resistor, with very few exceptions. This implies that in the present invention there is also a plurality of leakage paths through the gaps between the coupling surfaces. The flow within these gaps has the hydraulic characteristic determined by a leakage distributed over a long path and a number of concentrated losses corresponding to each change in direction of the main path. Therefore, the leakage path is also absolutely multistage, which implies that damaging phenomena such as micro-cavitation and erosion due to leakage flow are limited or completely eliminated.

According to the invention, in order to further reduce leakage flow through the gaps between the mating surfaces, a plurality of labyrinth grooves can be etched on the surface of the resistor, the shutter or both.

Thus, according to the present invention a trim for control valves is realised which has the features set forth in the independent claim.

Further preferred and/or particularly advantageous embodiments of the invention are described according to the features set forth in the appended dependent claims.

### Brief description of the drawings

The invention will now be described with reference to the appended drawings, which illustrate some non-limiting examples of implementation, wherein:
- figure 1 is a cross-sectional view of a trim for an alternative control valve according to the present invention,
- figure 2 is an axonometric view of a trim resistor of figure 1,
- figure 3 is an axonometric view of a trim shutter of figure 1,
- figure 4 is an alternative configuration of the figure 1 trim,
- figure 5 is a detail of the contaminant collection chambers
- figure 6 is a detail of the figure 1 trim showing the presence of the contaminant collection chambers,
- figure 7 is a schematic representation of a resistor having a single tortuous fluid disposal path, following a further configuration of the trim of figure 1, that is not part of the present invention,
- figure 8 is a schematic representation of a shutter whose protruding walls match the tortuous path of the resistor of figure 7, that is not part of the present invention,
- figure 9 is a partially sectioned axonometric view of a trim for a rotary control valve in a first embodiment of the present invention, that is not part of the present invention,
- figure 10 is an axonometric view of a trim for a rotary control valve in a second embodiment of the present invention, that is not part of the present invention,
- figure 11 is a cross-sectional view of a trim for an alternative control valve according to a further embodiment of the present invention, wherein the main components of the trim have an axisymmetric shape, that is not part of the present invention,
- figure 12 is an axonometric view of the trim resistor of figure 11, that is not part of the present invention and
- figure 13 is an axonometric view of the trimmer shutter of figure 11, that is not part of the present invention.

### Detailed description

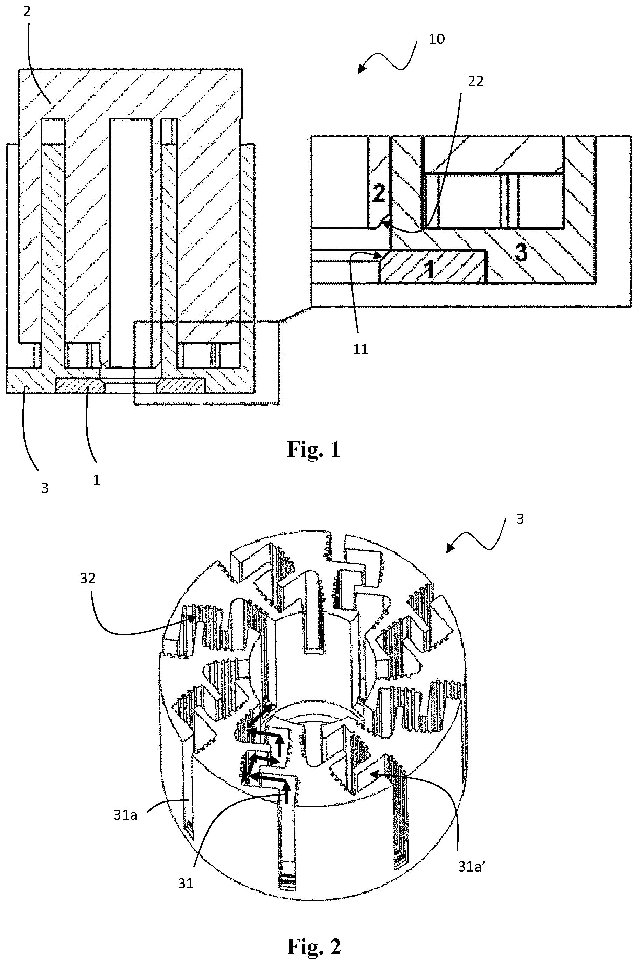

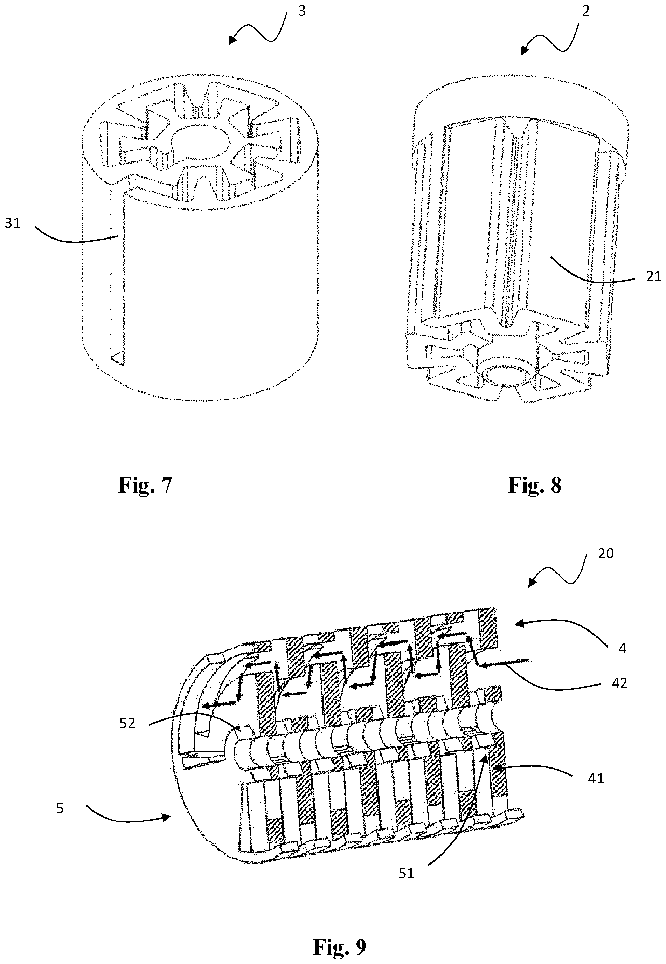

With particular reference to Figures 1 to 8, being figure 7 and 8 not part of the present invention, a pressure control element 10 (also mentioned as trim in the present description) for alternative valves is illustrated in Figure 1. According to an embodiment of the present invention, the trim 10 comprises:
- a resistor 3, a stationary element of the trim, i.e., the pressure control member having a plurality of cavities 31a having a plurality of fixed coupling surfaces 31a',
- a shutter 2, a movable element of the trim having a plurality of projecting walls 21 having a plurality of movable coupling surfaces 21a. The movable surfaces 21a couple with corresponding fixed surfaces 31a' defining at least one tortuous path 31 of the flow (tortuous in the sense that the path causes the fluid to perform a plurality of changes in direction). Furthermore, the shutter 2 is provided with a first conical coupling surface 22,
- a sealing seat 1, static and integral with the resistor 3, which has a second conical coupling surface 11 which, in contact with the first conical coupling surface 22 of the shutter 2, ensures the hermetic and repeatable closure of the trim 10.

According to the invention, the number of fluid paths is fixed while their cross-sectional area is continuously changed. In fact, in the examples of Figures 1 to 3, the resistor 3 has eight tortuous paths 31 deep each with six changes in direction. The width of the paths remains the same for different lifts of the shutter 2 while the height of the paths changes continuously with the stroke of the shutter.

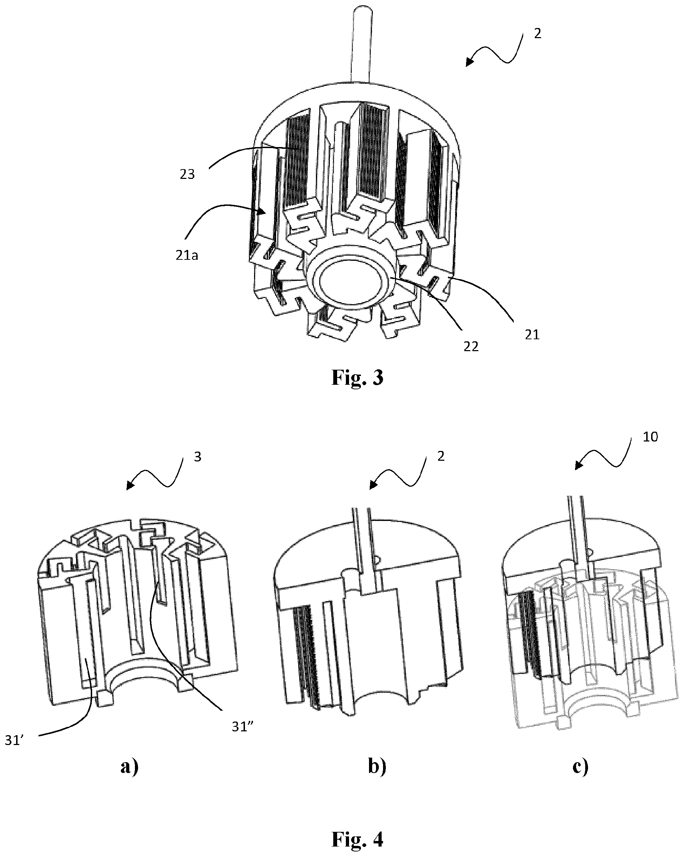

Another embodiment of the control element 10 is illustrated in figure 4. In this case, the twisted paths have different depths. In the example, only two depths can be seen for simplicity. The first level with greater depth acts at smaller shutter lifts and consists of four tortuous paths 31'; the second level with lesser depth acts (together with the first level), for higher shutter lifts and consists of eight tortuous paths, of which the four additional tortuous paths 31" are shallower than the previous four tortuous paths 31'. Therefore, from a predetermined value of the shutter lift, additional flow paths are added to those initially available in the first stage of raising the shutter from the seat. It is of course possible to have any number of levels, increasing as the shutter stroke increases. This provides a good approximation of the desired flow characteristic.

According to the invention, the pressure control element 10 is provided with a plurality of labyrinth grooves 23, 32 formed on the fixed surfaces 31a' of the tortuous path 31 of the resistor 3 (Figure 2) or on the movable surfaces 21a of the protruding walls 21 of the shutter 2 (Figure 3) or on both elements, resistor and shutter, of the trim 10. The plurality of labyrinth grooves 23, 32 is a suitable feature to reduce the amount of leakage occurring in the spaces between the corresponding mating surfaces of the shutter and resistor. The plurality of labyrinth grooves 23, 32 are realised by rectilinear grooves formed in the fixed surfaces 31a' of the resistor 3 and/or in the movable surfaces 21a of the shutter 2 and are perpendicular to the direction of flow.

Since the incisions in the tortuous path and the protruding walls of the shutter cannot be produced with extreme precision - or it may not be convenient to do so - both resistor and shutter can therefore be fitted with grooves that reduce the flow circulating in the space between the mating surfaces. This reduction in velocity also decreases the risk of micro-cavitation and erosion due to flow passing through the meatus between the resistor/shutter mating surfaces.

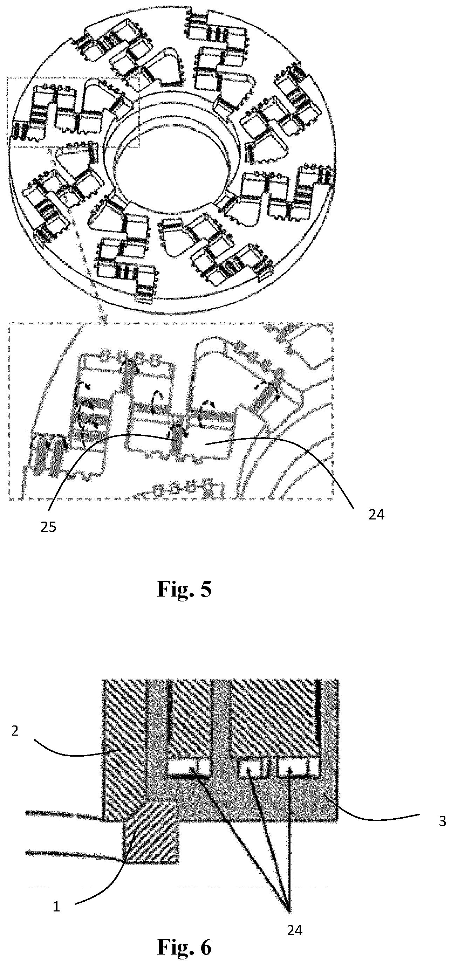

Furthermore, according to a further aspect of the present invention, the trim 10 has a plurality of contaminant collection chambers 24 to allow dirt and debris to be collected within the trim without compromising the hermetic sealing capability of the trim. These chambers are separated by compartments 25 so that the leakage flow through these collection chambers is also truly multi-stage as illustrated by the arrows in Figure 5. Advantageously, the collection chambers 24 can be cut into the resistor bottom. Figure 6 illustrates how the contaminant collection chambers 24 still allow the trim to be positioned correctly, i.e., sealed.

Advantageously, the trim may include a purge channel used to feed a purge fluid into the contaminant collection chambers. Contaminant removal can be performed in-line while the valve is closed from the bottom of the shutter, or even when the valve is open, depending on the application.

Although the trim according to the present invention may be provided with multiple tortuous paths 31, preferably to allow the flow of large contaminant particles, it may be advantageous to have a single tortuous path that can dispose of the entire flow of fluid. By increasing the number of pressure drop stages (i.e. the number of labyrinth direction changes), it is possible to reduce the flow velocity and thus further increase the cross-sectional size of the tortuous path without increasing the flow capacity. This form of actuation, that is not part of the present invention, is schematically illustrated in Figures 7 and 8 for the resistor and shutter, respectively.

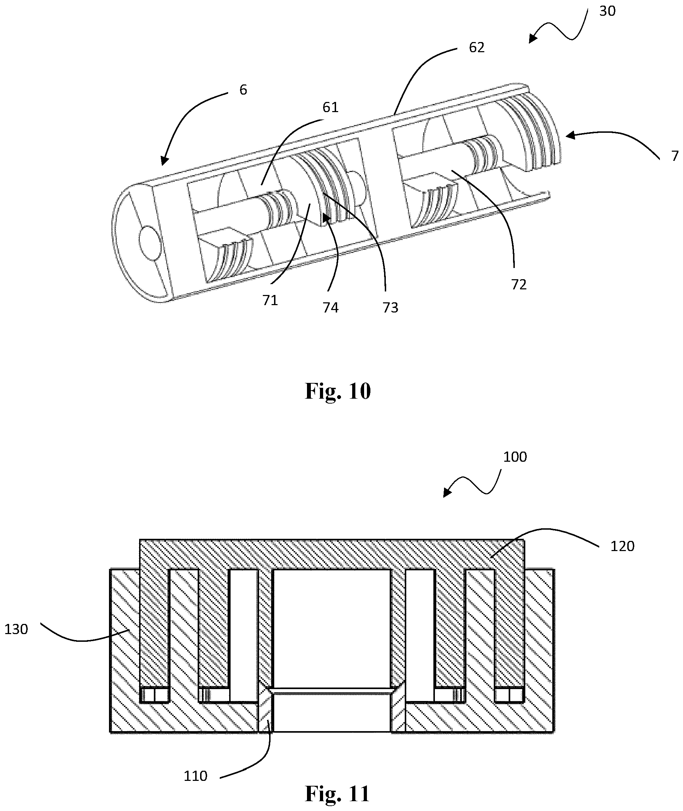

With particular reference to Figures 9 and 10, that are not part of the present invention, a rotary valve pressure control element 20 is illustrated in Figure 9 and a rotary valve pressure control element 30 is illustrated in Figure 10 in a second embodiment of the invention. The trim 20 comprises:
- a resistor 4, a stationary element of the trim 20, which has a plurality of stator discs 41, which may all be the same or differ to realise special characteristics of the tortuous flow path 42, for example an expanding area. The stator discs 41 are presented with hatching in Figure 9. To be assembled, the stator discs 41 can be split into two halves that can be made integral, once the whole is assembled, or just left side by side for easier maintenance.
- a shutter 5, a movable element of the trim, comprising a plurality of rotor discs 51, integral with a shaft. The projecting (i.e., radially outer) walls 52 of the rotor discs cooperate with corresponding walls of the resistor to define the tortuous path 42. The rotor discs can all be identical to each other or differentiated so as to achieve, in combination with the resistor, special characteristics of the tortuous flow path 42.

The trim 30 of figure 10, that is not part of the present invention, also comprises
- a resistor 6 provided with a plurality of stator discs 61. Advantageously, the resistor 6 further comprises a cylindrical tube 62 which contains all of the stator discs 61 which are fixed to the inner side surface of the cylindrical tube 62,
- a shutter 7 provided with a plurality of rotor discs 71, integral with a shaft 72.

In both configurations, the stator discs and the rotor discs alternate with each other, along the direction of the shaft. In particular, in the configuration of figure 9, the plurality of rotor discs 51 and stator discs 41 create a series of cavities having the shape of a labyrinthine tortuous path 42, as indicated by the arrows in the figure. The tortuous path 42 comprises sixteen sections with as many variations in direction between each pair of sections. In this case, eight rotor discs and eight stator discs are used. Each stator disc has the property of protruding into the next rotor disc cavity and the rotor discs have the property of protruding into the next stator disc. In this way, a rotation of the shaft changes the angular width of the tortuous path and consequently its flow rate.

By rotating shaft 72 of shutter 7, the cross-sectional area of the tortuous labyrinth path is altered, allowing the flow rate to be controlled.

In order to ensure the same flow passage area in each zone, the axial channels located closer to the outer diameter have a smaller radial extension than those located closer to the centre of the disc.

Trim 20, 30 for rotary valves could also include a sealing seat or, alternatively, a separate shut-off valve conveniently used to ensure a tight sealing.

As visible in figure 10, the trim 30 is also provided with a plurality of labyrinth grooves 73, formed, for example on the protruding walls 74 of the shutter 7 (figure 10), by means of rectilinear grooves. The plurality of labyrinth grooves 73, as we know, is a suitable feature to reduce the amount of leakage occurring in the spaces between the corresponding mating surfaces of the shutter and resistor.

In addition, the shape of the cavity in each disc can be shaped to provide one or more contaminant collection chambers for these rotary valve configurations as well. The waste collection chamber may be of the self-cleaning type in rotary execution or may be purged by an auxiliary purge fluid.

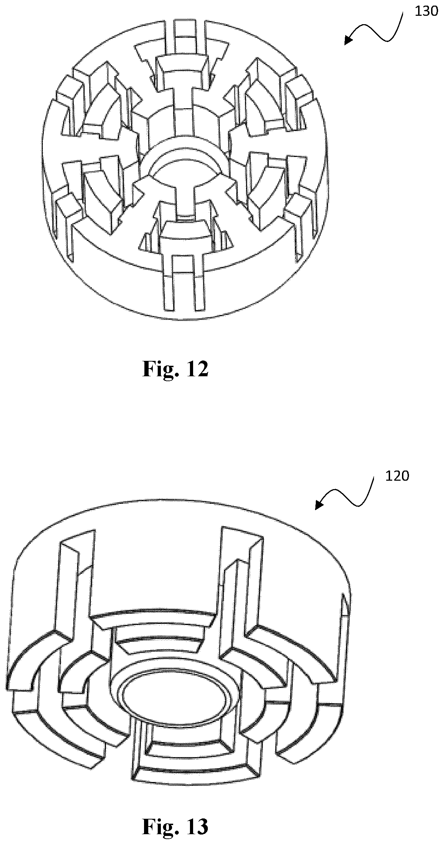

The present invention, of course, is not limited to pressure control element forms as described above. In fact, it is possible to envisage different embodiments which would ensure an easier implementation of at least one of the trim elements, for example the shutter could have a shape symmetrical with respect to the axis for most of its features and thus be easier to construct. A non-limiting example is illustrated in Figures 11 to 13, that are not part of the present invention, in which the trim 100 (Fig. 11) comprises a seat 110, a resistor 130 (Fig. 12) and a shutter 120 (Fig. 13) and all these three components are substantially axisymmetric. Furthermore, the same solution could occur in a hybrid mode, such as the solution in Figure 10 in which portions of the tortuous path are interspersed with portions that are not actively controlled.

As far as the production of this type of trim is concerned, there are several viable options, including cost-effective 'additive manufacturing' techniques. The trim components could still be manufactured as multi-disc castings. Finally, both the shutter profile and the resistor profile can be obtained by wire-cutting machines, after assembly of the resulting components.

To sum up, the invention described above entails numerous advantages. First of all, it is possible to achieve both large flow path cross-sections and a true multi-stage pressure drop without compromising the controllability of the valve. Additional features, such as labyrinth grooves on the side of the mating surfaces and contaminant collection chambers on the underside of the shutter and/or resistor, guarantee good performance under all operating conditions. By doing so, it is plausible to prolong the trim's operational life, while adopting relatively standard materials, even in severe, multi-phase applications that require accurate, consistent and robust flow control.

In addition to the modes of implementation of the invention, as described above, it is to be understood that there are numerous further variants. It should also be understood that said modes of implementation are merely illustrative and do not limit the scope of the invention, nor its possible applications or configurations. On the contrary, although the above description makes it possible for a person skilled in the art to implement the present invention at least according to an illustrative configuration thereof, it should be understood that numerous variations of the described components are conceivable, without thereby departing from the scope of the invention as defined in the appended claims.

## Claims

1. Pressure control element (10) for a fluid regulating valve comprising:
- a resistor (3), which is a stationary element that has a plurality of cavities (31a) having a plurality of fixed coupling surfaces (31a'),
- a shutter (2) which is a movable element that has a plurality of projecting walls (21) having a plurality of movable coupling surfaces (21a), wherein the movable coupling surfaces (21a) couple with corresponding fixed coupling surfaces (31a') defining at least one tortuous path (31) of the fluid;
wherein
- the number of the at least one tortuous path (31) of the fluid is fixed while its cross section is continuously modified as the position of the shutter (2) varies,
wherein the pressure control element (10) further comprises a plurality of labyrinth grooves (23, 32) formed on the fixed coupling surfaces (31a') of the tortuous path (31) of the resistor (3) and/or on the movable coupling surfaces (21a) of the projecting walls (21) of the shutter (2) said plurality of labyrinth grooves (23, 32) being perpendicular to the flow direction, the pressure control element being **characterized in that** said plurality of labyrinth grooves (23, 32) are made from rectilinear grooves obtained in the fixed coupling surfaces (31a') of the resistor (3) and/or in the movable coupling surfaces (21 a) of the shutter (2).

2. Pressure control element (10) according to claim 1, wherein the width of the at least one tortuous path (31) remains the same while the height or angular width of the at least one tortuous path (31) changes continuously as the shutter position varies.

3. Pressure control element (10) according to claim 1, in which the tortuous paths (31) have a different depth.

4. Pressure control element (10) according to claim 1, wherein to allow the flow of large particles of contaminant, the number of paths of the at least one tortuous path (31) is equal to one.

5. Pressure control element (10) according to any of the preceding claims, comprising a plurality of contaminant collection chambers (24) separated by compartments (25).

6. Pressure control element (10) according to claim 5, wherein the collection chambers (24) are obtained on the bottom of the resistor (3).

7. Pressure control element (10) according to any of the preceding claims, for an alternative fluid regulating valve, in which the shutter (2) is provided with a first conical coupling surface (22) and in which there is a sealing seat (1), static and integral with the resistor (3) having a second conical coupling surface (11) which in contact with the first conical coupling surface (22) of the shutter (2) ensures the hermetic and repeatable closure of the pressure control element (10).

## Patentansprüche

1. Druckregelelement (10) für ein Fluidregelventil, umfassend:
- einen Widerstand (3), der ein stationäres Element ist, das mehrere Hohlräume (31a) mit mehreren festen Kopplungsflächen (31a') aufweist,
- einen Verschluss (2), der ein bewegliches Element ist, das mehrere vorstehende Wände (21) mit mehreren beweglichen Kopplungsflächen (21a) aufweist, wobei die beweglichen Kopplungsflächen (21a) mit entsprechenden festen Kopplungsflächen (31a') gekoppelt sind. Definieren mindestens eines gewundenen Pfads (31) des Fluids; worin
- die Anzahl des mindestens eines gewundenen Pfads (31) des Fluids ist festgelegt, während sich sein Querschnitt kontinuierlich ändert, wenn sich die Position des Verschlusses (2) ändert,
wobei das Drucksteuerelement (10) außerdem mehrere Labyrinthnuten (23, 32) aufweist, die auf den festen Kopplungsflächen (31a') des gewundenen Pfads (31) des Widerstands (3) und/oder auf der beweglichen Kopplung ausgebildet sind Oberflächen (21a) der vorstehenden Wände (21) des Verschlusses (2), wobei die Vielzahl von Labyrinthnuten (23, 32) senkrecht zur Strömungsrichtung verläuft,
wobei das Druckregelelement **dadurch gekennzeichnet ist, dass** die mehreren Labyrinthnuten (23, 32) aus geradlinigen Nuten bestehen, die in den festen Kopplungsflächen (31a') des Widerstands (3) und/oder in den beweglichen Kopplungsflächen (21 a) erhalten sind) des Verschlusses (2).

2. Druckregelelement (10) nach Anspruch 1, wobei die Breite des mindestens eines gewundenen Pfads (31) gleichbleibt, während sich die Höhe oder Winkelbreite des mindestens eines gewundenen Pfads (31) mit dem Verschluss kontinuierlich ändert Position variiert (2).

3. Druckkontrollelement (10) nach Anspruch 1, bei dem die gewundenen Pfads (31) eine unterschiedliche Tiefe aufweisen.

4. Druckregelelement (10) nach Anspruch 1, wobei die Anzahl der Pfade des mindestens eines gewundenen Pfades (31) gleich eins ist, um den Fluss großer Schmutzpartikel zu ermöglichen.

5. Druckregelelement (10) nach einem der vorangehenden Ansprüche, umfassend eine Vielzahl von Schmutzstoffsammelkammern (24), die durch Kammern (25) getrennt sind.

6. Druckregelelement (10) nach Anspruch 5, wobei die Sammelkammern (24) auf der Unterseite des Widerstands (3) ausgebildet sind.

7. Druckregelelement (10) nach einem der vorhergehenden Ansprüche für ein alternatives Fluidregelventil, bei dem der Verschluss (2) mit einer ersten konischen Kopplungsfläche (22) versehen ist und bei dem ein Dichtsitz vorhanden ist ( 1), statisch und fest mit dem Widerstand (3) verbunden, mit einer zweiten konischen Kopplungsfläche (11), die in Kontakt mit der ersten konischen Kopplungsfläche (22) des Verschlusses (2) den hermetischen und wiederholbaren Verschluss des Druckregelelements gewährleistet (10).

## Revendications

1. Elément de contrôle de pression (10) pour vanne de régulation de fluide comprenant :
- une résistance (3), qui est un élément fixe qui possède une pluralité de cavités (31a) ayant une pluralité de surfaces de couplage fixes (31a'),
- un obturateur (2) qui est un élément mobile qui possède une pluralité de parois saillantes (21) ayant une pluralité de surfaces de couplage mobiles (21a), les surfaces de couplage mobiles (21a) s'accouplant avec des surfaces de couplage fixes correspondantes (31a') pour définir au moins un chemin tortueux (31) du fluide ; où
- le numéro du au moins un chemin tortueux (31) du fluide est fixe tandis que sa section est continuellement modifiée au fur et à mesure que la position du volet (2) varie,
dans lequel l'élément de contrôle de pression (10) comprend en outre une pluralité de rainures labyrinthes (23, 32) formées sur les surfaces de couplage fixes (31a') du chemin tortueux (31) de la résistance (3) et/ou sur le couplage mobile surfaces (21a) des parois saillantes (21) du volet (2), ladite pluralité de rainures labyrinthes (23, 32) étant perpendiculaire à la direction d'écoulement,
l'élément de contrôle de pression étant **caractérisé en ce que** ladite pluralité de rainures labyrinthes (23, 32) est réalisée à partir de rainures rectilignes obtenues dans les surfaces de couplage fixes (31a') de la résistance (3) et/ou dans les surfaces de couplage mobiles (21 a ) du volet (2).

2. Elément de contrôle de pression (10) selon la revendication 1, dans lequel la largeur du au moins un chemin tortueux (31) reste la même tandis que la hauteur ou la largeur angulaire du au moins un chemin tortueux (31) change continûment au fur et à mesure du volet. la position varie (2).

3. Elément de contrôle de pression (10) selon la revendication 1, dans lequel les chemins tortueux (31) ont une profondeur différente.

4. Elément de contrôle de pression (10) selon la revendication 1, **caractérisé en ce que** pour permettre l'écoulement de grosses particules de contaminant, le nombre de trajets de l'au moins un trajet tortueux (31) est égal à un.

5. Elément de contrôle de pression (10) selon l'une quelconque des revendications précédentes, comprenant une pluralité de chambres de collecte de contaminants (24) séparées par des compartiments (25).

6. Elément de contrôle de pression (10) selon la revendication 5, dans lequel les chambres de collecte (24) sont obtenues sur le fond de la résistance (3).

7. Elément de contrôle de pression (10) selon l'une quelconque des revendications précédentes, pour une vanne de régulation de fluide alternative, dans laquelle l'obturateur (2) est pourvu d'une première surface de couplage conique (22) et dans laquelle se trouve un siège d'étanchéité ( 1), statique et solidaire de la résistance (3) présentant une deuxième surface de couplage conique (11) qui en contact avec la première surface de couplage conique (22) de l'obturateur (2) assure la fermeture hermétique et répétable de l'élément de contrôle de pression (dix).
